# EUROPÄISCHE PATENTSCHRIFT

(11) **EP 0 833 689 B1**
(45) Veröffentlichungstag und Bekanntmachung des Hinweises auf die Patenterteilung: **15.09.1999**
(21) Anmeldenummer: 96920797.6
(22) Anmeldetag: 05.06.1996
(51) Int. Cl.: B01J 19/08, C02F 1/48

(54) **VERFAHREN UND VORRICHTUNG ZUM MAGNETISCHEN BEHANDELN VON STOFFEN**
PROCESS AND APPARATUS FOR THE MAGNETIC TREATMENT OF SUBSTANCES
PROCEDE ET DISPOSITIF DE TRAITEMENT MAGNETIQUE DE SUBSTANCES

(30) Priorität: 20.06.1995 DE 19522240; 19.07.1995 DE 29511668 U; 26.09.1995 DE 19535682
(43) Veröffentlichungstag der Anmeldung: 08.04.1998
(73) Patentinhaber: Mutzke, Horst, 37154 Northeim (DE); Bühre, Werner, 37133 Friedland (DE); Schuhmann, Thomas, 37133 Friedland (DE); Dorl, Theo, 37308 Heiligenstadt (DE)
(72) Erfinder: Mutzke, Horst, 37154 Northeim (DE); Bühre, Werner, 37133 Friedland (DE); Schuhmann, Thomas, 37133 Friedland (DE); Dorl, Theo, 37308 Heiligenstadt (DE)
(74) Vertreter: Fritsche, Rainer, Dipl.-Wirtsch.-Ing.
(86) Internationale Anmeldenummer: EP9602452
(87) Internationale Veröffentlichungsnummer: WO9700722

(56) Entgegenhaltungen:
- DE-A- 2 609 195
- GB-A- 2 098 088
- US-A- 4 299 701
- US-A- 4 659 479
- US-A- 5 224 922

## Beschreibung

Die vorliegende Erfindung betrifft ein Verfahren sowie eine Vorrichtung zum physikalischen Behandeln von Stoffen gemäß den Oberbegriffen der Ansprüche 1 und 8.

Es ist heute vielfach üblich, an sich gebrauchsfertige Stoffe bzw. Substanzen vor ihrem eigentlichen Einsatz einem Behandlungsschritt zu unterwerfen, durch den die positiven Wirkungen dieser Stoffe bzw. Substanzen gesteigert und/oder ggf. ihre negativen Eigenschaften verringert werden sollen. So ist es beispielsweise für Leitungswasser bekannt, durch den Einsatz von Ionentauschern die Waschfähigkeit des Wassers zu steigern und/oder die Verkalkung von Rohrleitungen zu verringern. Diese Ionentauscher führen zwar zu einer Verringerung der Anteile an Calzium und Magnesium im Wasser. jedoch erhöhen sie erheblich den Natriumanteil. Wird das Leitungswasser außer zu Waschzwecken und dgl. auch zum Trinken oder zur Zubereitung von Lebensmitteln verwendet, führt dieser erhöhte Natriumanteil zu erheblichen Gesundheitsrisiken.

Zur Vermeidung dieser Nachteile bei der Aufbereitung von Wasser ist bereits in der Praxis vorgeschlagen worden, das Wasser einem Magnetfeld auszusetzen, Hierbei werden mehrere ringförmige Permanentmagneten auf ein von dem Leitungswasser durchströmtes Rohr in der Weise aufgeschoben, daß ihre Polaritäten in einer bestimmten Reihenfolge aufeinander abfolgen. Die Permanentmagneten erzeugen dabei stehende Feldlinien, so daß zum Behandeln des Wassers dieses durch das Rohr fließen muß. Dabei hat der Betrag der Fließgeschwindigkeit einen erheblichen Einfluß auf die Wirksamkeit dieses bekannten Verfahrens, so daß, um einen einigermaßen guten Effekt zu erzielen, die Fließgeschwindigkeit hierbei präzise eingestellt werden muß. Mit dieser bekannten Anordnung ist daher die Behandlung von sich in Ruhe befindlichem Wasser nicht möglich. Als besonders nachteilig hat es sich dabei erwiesen, daß die hierdurch erzielte Steigerung der positiven Wirkung nur verhältnismäßig kurz anhält, so daß das Wasser nach der Behandlung sogleich seiner eigentlichen Verwendung zugeführt werden muß und nicht beispielsweise gespeichert werden kann. Darüber hinaus sind für jeden Anwendungsfall eine Vielzahl an Versuchen notwendig, um die Anordnung der Magnete oder die von ihnen hervorgerufene Magnetfeldstärke usw. auf den Durchmesser des Rohres, die Fließgeschwindigkeit des Wassers usw. abzustimmen.

Aus der deutschen Offenlegungsschrift 26 09 195 geht ein Verfahren gemäß dem Oberbegriff des Anspruchs 1 sowie eine Vorrichtung gemäß dem Oberbegriff des Anspruchs 8 hervor. Bei diesem bekannten Verfahren bzw. bei dieser bekannten Vorrichtung werden Rechteckimpulse der Induktivität zugeführt. Aufgrund der Steilheit der Flanke eines Rechteckimpulses, d.h. seinem plötzlichen Anstieg bzw. Abfall entstehen insbesondere bei der abfallenden Flanke Schwebungen bzw. Ausschwinger, die sich dem nachfolgenden Rechteckimpuls überlagern und dessen Wirkung auslöschen oder ins Gegenteil verkehren können.

Gleiches gilt für das Verfahren bzw. die Vorrichtung, die aus dem US-Patent 5,224,922 entnehmbar sind.

Es ist Aufgabe der vorliegenden Erfindung, ein Verfahren sowie eine Vorrichtung der eingangs genannten Art zu schaffen, die bei einem einfachen Aufbau eine physikalische Behandlung der Stoffe in einer effektiveren Weise erlauben.

Hinsichtlich des Verfahrens wird die vorstehende Aufgabe durch die Merkmale des Anspruchs 1 gelöst. Durch das sich aus unterschiedlichen elektromagnetischen Einzelfeldern zusammensetzende elektromagnetische Feld kann der Stoff in einer Weise behandelt werden, daß die durch die physikalische Behandlung hervorgerufene Steigerung der positiven Wirkungen und/oder die Reduzierung der negativen Eigenschaften gegenüber permanentmagnetischen Systemen wesentlich verbessert wird bzw. lang anhaltend ist. Dabei gestattet insbesondere das sich drehende bzw. wechselnde elektromagnetische Feld, daß der zu behandelnde Stoff sowohl dann behandelt werden kann, wenn er fließt, als auch dann, wenn er sich in Ruhe befindet. Hierdurch werden die Einsatzmöglichkeiten des erfindungsgemäßen Verfahrens gegenüber den aus dem Stand der Technik bekannten erheblicherweitert. Schließlichermöglicht das zusammengesetzte elektromagnetische Feld, daß eine Abstimmung der einzelnen Faktoren untereinander nicht mehr notwendig ist und die Fließgeschwindigkeit des zu behandelnden Stoffes keinen Einfluß auf die Wirksamkeit des Verfahrens hat.

Die das zusammengesetzte elektromagnetische Feld bildenden Einzelfelder können auf unterschiedliche Weise erzeugt werden. So kann das stehende elektromagnetische Feld durch Permanentmagneten erzeugt werden. Besonders vorteilhaft ist es, wenn das stehende elektromagnetische Feld durch eine Induktivität hervorgerufen wird, an der eine Gleichspannung anliegt. Hierbei kann das eine wechselnde Polarität aufweisende bzw. wechselnde elektromagnetische Feld ebenfalls durch diese Induktivität hervorgerufen werden, an der neben der Gleichspannung noch eine Wechselspannung anliegt. Grundsätzlich besteht aber auch die Möglichkeit, für jedes elektromagnetische Feld eine eigene Induktivität vorzusehen. Dies hat dann insbesondere den Vorteil, daß eine sehr feine Abstimmung der einzelnen Felder möglich ist.

Weiterhin hat es sich als vorteilhaft erwiesen, wenn die Wechselspannung eine Trapezform aufweist. Hierdurch wird ein ausgeglicheneres Ein- bzw. Ausschwingen bei dem einzelnen Wechselspannungsimpuls auf Grund der Geometrie der Flanken, insbesondere der Steilheit der Trapezimpulse erreicht. Hierdurch wird weiterhin erreicht, daß die in den an- und absteigenden Flanken der Trapezimpulse enthaltenen Frequenzen sich zusätzlich positiv auf das elektromagnetische Feld auswirken. Die Energieübertragung auf den zu behandelnden Stoff wird dadurch verbessert. Bei Verwendung von Rechteckimpulsen, ist das Ein- und Ausschwingverhalten auf Grund der gegenüber Trapezimpulsen steileren Flanken weniger vorteilhaft. Die trapezförmige Wechselspannung kann dabei von einer sinusförmigen Wechselspannung beispielsweise durch einen speziell aufgebauten Verstärker abgeleitet werden.

Wie bereits vorstehend erwähnt worden ist, kann das erfindungsgemäße Verfahren sowohl bei einem fließenden als auch bei einem nicht fließenden, dh. bei einem sich in Ruhe befindlichen Stoff angewendet werden. Handelt es sich bei dem zu behandelnden Stoff um eine fließfähige Substanz, so ist es von Vorteil, wenn der Stoff durch einen Durchflußkörper hindurchgeführt wird und dabei dem zusammengesetzten elektromagnetischen Feld ausgesetzt wird. Dabei kann das wechselnde elektromagnetische Feld in einer Weise ausgerichtet sein, daß es um eine zu der Fließrichtung des fließfähigen Stoffes parallele Achse dreht.

Ebenso besteht die Möglichkeit, daß der zu behandelnde Stoff in einem Behälter aufgenommen wird, in den eine Vorrichtung zum Erzeugen des zusammengesetzten elektromagnetischen Felds gemäß dem erfindungsgemäßen Verfahren bzw. der erfindungsgemäßen Vorrichtung eingetaucht werden kann. Ebenso besteht die Möglichkeit, auch diese Vorrichtung entlang der Außenseite des Behälters zu führen.

Um eine weitere Steigerung der positiven Wirkungen bzw. eine noch deutlichere Reduzierung der negativen Eigenschaften der zu behandelnden Stoffe zu erreichen, kann weiterhin vorgesehen sein, daß der Stoff mehrmals hintereinander dem zusammengesetzten elektromagnetischen Feld ausgesetzt wird. Dies kann beispielsweise bei einem Stoff, der fließfähig ist, dadurch erreicht werden, daß mehrere Durchflußkörper hintereinander in Reihe angeordnet sind, wobei jeder Durchflußkörper wenigstens eine Induktivität zum Erzeugen des zusammengesetzten elektromagnetischen Felds aufweist.

Damit größere Stoffmengen auf sehr ökonomische Weise behandelt werden können, kann weiterhin vorgesehen sein, daß der Stoff in zumindest zwei Mengenanteile aufgeteilt wird, die zeitgleich jeweils einem zusammengesetzten elektromagnetischen Feld ausgesetzt werden. Handelt es sich bei dem zu behandelnden Stoff wiederum um einen fließfähigen Stoff, so können hierzu wenigstens zwei Durchflußkörper vorgesehen sein, die parallel zueinander angeordnet werden und die jeweils wenigstens eine Induktivität zum Erzeugen des zusammengesetzten elektromagnetischen Felds aufweisen.

In diesem Zusammenhang ist noch zu bemerken, daß bei einem fließfähigen Stoff, der zu behandeln ist, die Durchflußkörper sowohl parallel zueinander als auch in Reihe hintereinander angeordnet sein können, so daß nicht nur eine große Menge eines Zu behandelnden Stoffes behandelt werden kann, sondern auch die Steigerung der positiven Eigenschaften bzw. die Reduzierung der negativen Eigenschaften verstärkt werden kann.

Hinsichtlich der Vorrichtung wird die vorstehende Aufgabe durch die Merkmale des Anspruchs 8 gelöst. Hierbei treten die gleichen im Zusammenhang mit dem erfindungsgemäßen Verfahren geschilderten Vorteile auf.

Wie bereits vorstehend darauf hingewiesen worden ist, kann das elektromagnetische Feld grundsätzlich durch unterschiedliche Baugruppen und/oder Schaltungen erzeugt werden. Besonders günstig ist es, wenn die Induktivität eine Spule ist, die vorzugsweise (je nach Verstärkertyp, Spannungshöhe und Frequenz) aus acht Lagen mit 350 Wicklungen pro Lage gebildet ist.

Weiterhin hat es sich als vorteilhaft erwiesen, wenn die Schaltung einen Oszillator zum Erzeugen einer sinusförmigen Wechselspannung aufweist, die zu einer trapezförmigen Wechselspannung mit einer Impulshöhe von 5 Vₛₛ bis 50 Vₛₛ, vorzugsweise 15 Vₛₛ veränderbar ist.

Des weiteren hat es sich als vorteilhaft erwiesen, wenn die Schwingungsfrequenz des Oszillators zwischen 100 Hz und 10.000 Hz liegt, vorzugsweise 5.000 Hz ist, da hierdurch die Funktionsweise des erfindungsgemäßen Verfahrens bzw. der erfindungsgemäßen Vorrichtung unabhängig von der Fließgeschwindigkeit eines zu behandelnden Stoffes ist. Bei dem Einsatz des erfindungsgemäßen Verfahrens bzw. der erfindungsgemäßen Vorrichtung zur Vermeidung von Kalkablagerungen an Leitungsrohren hat es sich gezeigt, daß bei einer Oszillatorfrequenz von ca. 5000 Hz die Effektivität hinsichtlich der Kalkbehandlung am deutlichsten war.

Für das Behältnis zur Aufnahme des zu behandelnden Stoffes können die unterschiedlichsten Materialien vorgesehen sein. Wird hierbei ein Kunststoff, vorzugsweise PVC verwendet, so bilden die Behältnisse keine magnetische Abschirmung. Wird der Durchflußkörper bei der Behandlung von Trinkwasser eingesetzt, so ist es vorteilhaft, wenn er in allen Teilen der Trinkwasserverordnung entspricht. Je kleiner hierbei der Durchmesser des Durchflußkörpers ist, desto höher ist die Wirksamkeit der Feldlinien im Inneren des Rohres. Je länger die Wicklung am Durchflußkörper ist, desto ungünstiger ist die elektromagnetische Einwirkung, da die Feldlinien zu lang werden.

Das erfindungsgemäße Verfahren bzw. die erfindungsgemäße Vorrichtung haben sich besonders vorteilhaft bei der Aufbereitung bzw. Behandlung von Wasser erwiesen. Insbesondere Wasser, das für Aquarien, zum Gießen von Pflanzen, im gesundheitsmedizinischen sowie gastronomischen Bereich eingesetzt wird, hat vorteilhafte Wirkungen gezeigt. Hierbei wurde nicht nur eine Verringerung der Verkalkung der Leitungsrohre erreicht, sondern insbesondere beim Einsatz im agrartechnischen Sektor eine Steigerung des Pflanzenwuchses beobachtet, da die Pflanzen die im Boden enthaltenen Nährstoffe besser aufnehmen. Außerdem wird der Einsatz von Düngemitteln und Unkrautvernichtungsmitteln reduziert. Auch hat sich eine vorteilhafte Wirkung insbesondere im Zusammenhang mit Aquarien gezeigt, da dort der Pflanzenwuchs der eingesetzten Wasserpflanzen erheblich verbessert, der Abbau von Nitraten in insbesondere Aquarien und die Algenbildung reduziert wurde, Neben der Behandlung von Wasser hat sich das erfindungsgemäße Verfahren bzw. die erfindungsgemäße Vorrichtung auch bei der Herstellung und Verarbeitung von Beton und Baustoffen positiv ausgewirkt. Hierbei wird insbesondere die Bearbeitbarkeit, die Wasseraffinität, die Naßrohdichte, die Trockenrohdichte, die Kapilarität sowie die Porosität, die Haftzugfestigkeit und die Sprühfestigkeit verbessert. Gleichzeitig kann der Einsatz chemischer Substanzen erheblich verringert werden. Eine Verbesserung des Betons und der Baustoffe hat sich insbesondere bei der Betonherstellung, Betonvorfabrikation, Rohrenfabrikation, Verbundsteinfabrikation, der Glasfaser-, Kohlefaser- sowie Styroporbetonherstellung, der Betonsanierung, Bauwerksanierung sowie bei Spritzbeton-, Naß- und Trockenspritzverfahren gezeigt. Weiterhin haben sie sich beim Einsatz und Verarbeitung von Mikrosilikaten, Flugasche, Lignisulfonate, Polymere, Sackmaterialien, wie beispielsweise Putz, Estrich, Gipse usw. und der Produktion auf Zement- und Kalkbasis als vorteilhaft erwiesen. Insbesondere bei dem Einsatz von Spritzbetonverfahren hat das erfindungsgemäße Verfahren bzw. die erfindungsgemäße Vorrichtung besondere Vorteile gezeigt.

Auch kann das erfindungsgemäße Verfahren bzw. die erfindungsgemäße Vorrichtung zum physikalischen Behandeln von Minerllaugen, Säuren, Basen usw. eingesetzt werden. Darüber hinaus besteht die Möglichkeit, das erfindungsgemäße Verfahren bzw. die erfindungsgemäße Vorrichtung für medizinische Zwecke einzusetzen, wie beispielsweise zur Beseitigung von Arterienverkalkungen beim Menschen oder bei Tieren. Schließlich kann das erfindungsgemäße Verfahren bzw. die erfindungsgemäße Vorrichtung innerhalb von komplexen Maschinen und Anlagen Verwendung finden.

Neben dem Einsatz für fließfähige Stoffe kann das erfindungsgemäße Verfahren bzw. die erfindungsgemäße Vorrichtung auch für nicht fließfähige Stoffe eingesetzt werden, wie Baustoffe und dgl., die dadurch eine höhere Bindungsfestigkeit gezeigt haben.

Es ist noch zu bemerken, daß die Stromversorgung durch Solarzellen erfolgen kann. Weiterhin kann insbesondere Niederspannung eingesetzt werden.

Ein Ausführungsbeispiel der Erfindung wird nachstehend anhand der Zeichnungen erläutert. Es zeigt:
- Figur 1: eine beispielhafte Darstellung des Feldlinienverlaufs bei einem Ausführungsbeispiel der vorliegenden Erfindung;
- Figur 2: eine auseinandergezogene, perspektivische Darstellung eines bei der vorliegenden Erfindung eingesetzten Durchflußkörpers; und
- Figur 3: ein Ersatzschaltbild für eine bei dem erfindungsgemäßen Verfahren bzw. der erfindungsgemäßen Vorrichtung eingesetzten Schaltung.

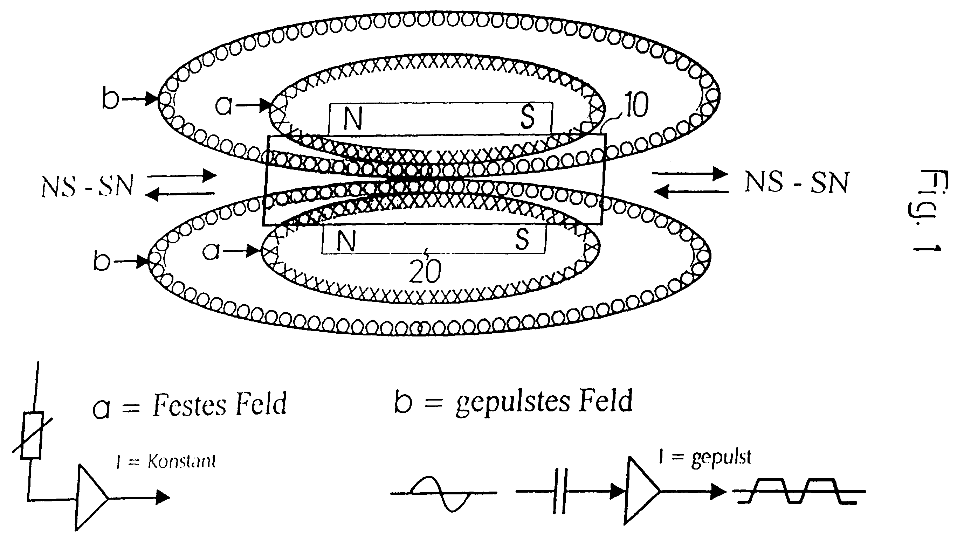

In Figur 1 ist eine Funktionsweise des erfindungsgemäßen Verfahrens sowie der erfindungsgemäßen Vorrichtung bei der physikalischen Behandlung eines fließfähigen Stoffes wiedergegeben, bei der der Stoff durch einen Durchflußkörper 10 aus Kunststoff, vorzugsweise PVC beispielsweise, bezogen auf Figur 1, von links nach rechts hindurchfließt. An der Außenseite des Durchflußkörpers 10 ist eine nur schematisch dargestellte Spule 20 angeordnet, an der eine Spannung angelegt wird. Mittels einer Gleichspannung wird ein festes bzw. stehendes Magnetfeld erzeugt, dem ein durch eine Wechselspannung erzeugtes, gepulstes bzw. wechselndes elektromagnetisches Feld überlagert wird. Hierbei wechselt die Polarität permanent hin- und her, wie dies in Figur 1 durch die Pfeile angedeutet ist. Darüber hinaus sind die Feldlinien der Felder so ausgerichtet, daß sie in der Mitte des Durchflußkörpers 10 im wesentlichen in Richtung der Durchflußrichtung des zu behandelnden Stoffes verlaufen.

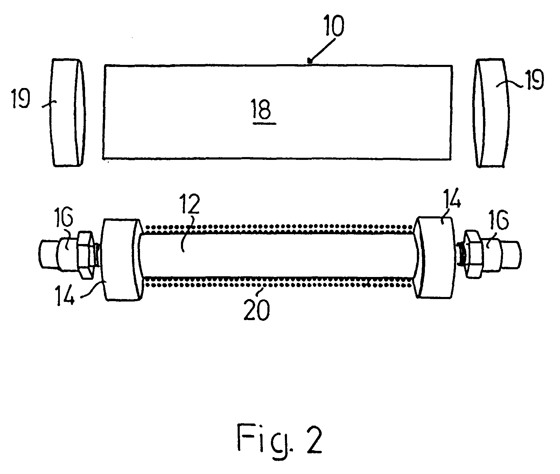

Figur 2 gibt einen Durchflußkörper 10 im Detail wieder. Der Durchflußkörper 10 weist einen inneren Durchflußkörper 12 auf, auf den die Spule 20 aufgeschoben worden ist. An den beiden äußeren Enden des inneren Durchflußkörpers 12 sind Abschlußelemente 14 vorgesehen, die 3/4" Zoll-Abschlußelemente sein können und die 3/4" Zoll-Aufnahmen 19 aufweisen. Hierzu kann ein Außenmantel 18 aufgeschoben werden, der die Spule 20 umgibt und der durch zwei stirnseitig angeordnete Halteelemente 19 gehalten wird.

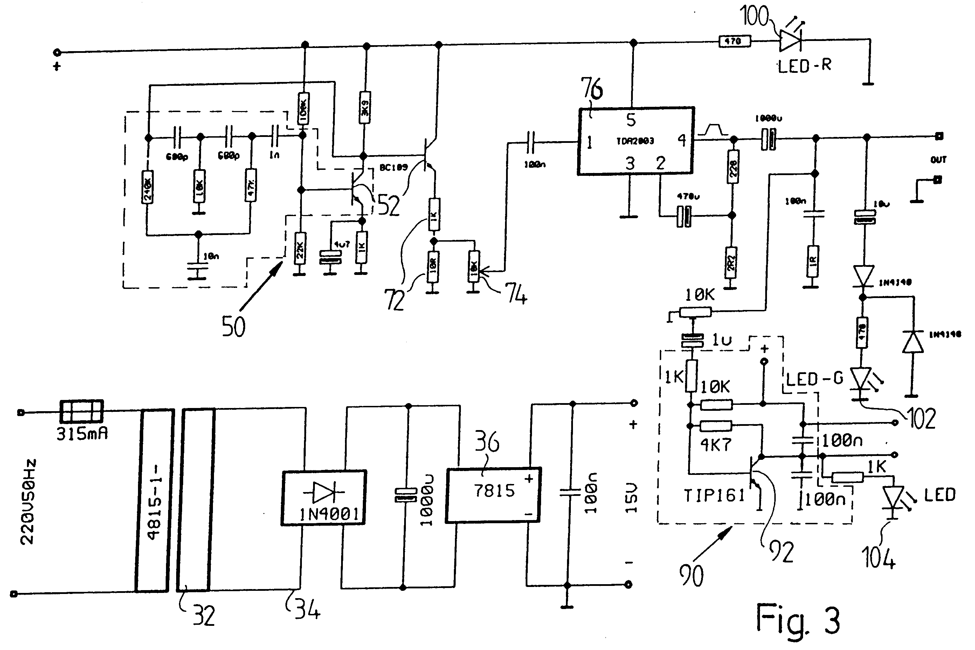

In Figur 3 ist eine Schaltung zum Erzeugen sowohl des stehenden als auch des sich drehenden bzw. wechselnden elektromagnetischen Feldes gezeigt. Die Schaltung besteht aus vier Schaltungsteilen, nämlich der Stromversorgung 30, dem Oszillator 50, der Impulsverstärkung 70 sowie dem Leistungssteuerteil 90.

Hierbei ist die Stromversorgung durch einen Netztrafo 32 galvanisch vom Netz getrennt. Gleichzeitig wird mit diesem Netztrafo 32 die Versorgungsspannung im Niedervoltnetzteil 34 erzeugt. Nach der Gleichrichtung wird mit dem integrierten Schaltkreis 36 (IC 7815) die Gleichspannung, die für die weitere Funktion der Schaltung benötigt wird, stabilisiert.

Der Oszillator 50 ist als Win-Brücken-Oszillator aufgebaut und weist die beiden Transistoren 52 auf. Der Oszillator ist auf eine Frequenz von ca. 5000 Hz eingestellt.

Die im Oszillator 50 erzeugte Frequenz von 5000 Hz wird als Sinussignal über den Spannungsteiler 72 (1 K - 10 K) dem Trimmpoti 74 (10 K) zugeführt. Mit dem Trimmpoti 74 wird die Spannungshöhe des Sinussignals so eingestellt, daß der nachgeschaltete Impulsverstärker und Impulsformer 76 (TDA 2003) übersteuert wird. Durch diese Maßnahme wird erreicht, daß am Ausgang 4 des Verstärkers 76 eine Trapezspannung zur Verfügung steht. Die Höhe der Trapezspannung beträgt dabei ca. 15 Vₛₛ.

Der Leistungssteuerteil 90 der Schaltung ist mit einem Darlington Transistor 92 in Emitterschaltung aufgebaut. Der Transistor 92 wird gleichspannungsmäßig vorgespannt (vgl. Plus-Pol von Schaltkreis 36 und Widerstand 10kΩ innerhalb des Leistungssteuerteils 90), damit im nachgeschalteten Durchflußkörper ein stehendes elektromagnetisches Feld erzeugt wird. Außerdem werden im Leistungssteuerteil 90 die Trapezimpulse aufgeschaltet, die im Durchflußkörper ein trapezförmiges, drehendes bzw. wechselndes Wechselfeld erzeugen, welches den stehenden Impulsen überlagert ist.

Abschließend ist noch zu bemerken, daß drei LED-Anzeigen 100, 102, 104 zur Überwachung von Stromversorgung. Oszillator und Durchflußkörper dienen.

Es ist noch zu bemerken, daß der Darlington-Transistor 92 (TIP 161), der an der Basis gleichspannungsmäßig vorgespannt ist, für das stehende Feld maßgebend ist. Der Impulsverstärker 76 (TDA 2003) ist dagegen für das Wechseln im Magnetfeld zuständig.

## Patentansprüche

1. Verfahren zum physikalischen Behandeln von Stoffen, insbesondere zum Behandeln von Wasser, Minerallaugen, Sauren, Basen und dgl., bei dem der Stoff einem zusammengesetzten elektromagnetischen Feld ausgesetzt wird, das durch zumindest ein stehendes sowie ein wechselndes elektromagnetisches Feld gebildet wird, wobei das stehende elektromagnetische Feld durch eine Induktivität hervorgerufen wird, an der eine Gleichspannung anliegt, und wobei das wechselnde elektromagnetische Feld durch eine Induktivität hervorgerufen wird, an der eine Wechselspannung anliegt,
**dadurch gekennzeichnet,** daß das sich wechselnde elektromagnetische Feld durch eine trapezförmige Wechselspannung hervorgerufen wird.

2. Verfahren nach Anspruch 1,
**dadurch gekennzeichnet,** daß die trapezförmige Wechselspannung aus einer sinusförmigen Wechselspannung abgeleitet wird.

3. Verfahren nach Anspruch 1 oder 2, bei dem der zu behandelnde Stoff fließfähig ist,
**dadurch gekennzeichnet,** daß der Stoff durch einen Durchflußkörper hindurchgeführt und dabei dein zusammengesetzten elektromagnetischen Feld ausgesetzt wird.

4. Verfahren nach Anspruch 3,
**dadurch gekennzeichnet,** daß sich das wechselnde elektromagnetische Feld in eine zu der Fließrichtung des fließfähigen Stoffes parallelen Achse dreht.

5. Verfahren nach einem der Ansprüche 1 bis 4,
**dadurch gekennzeichnet,** daß der Stoff in einem Behälter aufgenommen wird, in den eine Vorrichtung zum Erzeugen des zusammengesetzten elektromagnetischen Felds eingetaucht wird.

6. Verfahren nach einem der Ansprüche 1 bis 5,
**dadurch gekennzeichnet**, daß der Stoff mehrmals hintereinander dem zusammengesetzten elektromagnetischen Feld ausgesetzt wird.

7. Verfahren nach einem der Ansprüche 1 bis 6,
**dadurch gekennzeichnet**, daß der Stoff in zumindest zwei Mengenanteile aufgeteilt wird, die zeitgleich jeweils einem zusammengesetzten elektromagnetischen Feld ausgesetzt werden.

8. Vorrichtung zum physikalischen Behandeln von Stoffen, insbesondere zum Behandeln von Wasser, vorzugsweise zum Durchführen des Verfahrens nach einem der Ansprüche 1 bis 7, bei der ein Aufnahmebehältnis (10) für den Stoff sowie eine Induktivität (20) vorgesehen ist, die mit einer Schaltung verbunden ist, welche ein zusammengesetztes elektromagnetisches Feld an der Induktivität herruft, das sich zumindest aus einem stehenden sowie einem wechselnden elektromagnetischen Feld zusammensetzt,
**dadurch gekennzeichnet**, daß Mittel zum Erzeugen von trapezförmigen Impulsen für das wechselnde elektromagnetische Feld vorgesehen sind.

9. Vorrichtung nach Anspruch 8,
**dadurch gekennzeichnet**, daß die Induktivität eine Spule (20) ist.

10. Vorrichtung nach Anspruch 9,
**dadurch gekennzeichnet**, daß die Spule (20) aus 8 Lagen mit 350 Wicklungen pro Lage gebildet ist.

11. Vorrichtung nach einem der Ansprüche 8 bis 10, bei der der Stoff fließfähig ist,
**dadurch gekennzeichnet,** daß das Aufnahmebehältnis durch wenigstens einen ein Hindurchfließen des Stoffes ermöglichenden Durchflußkörper (10) gebildet ist, an dessen Außenseite die Induktivität (20) vorgesehen ist.

12. Vorrichtung nach Anspruch 11,
**dadurch gekennzeichnet, daß** mehrere Durchflußkörper (10) vorgesehen sind, die hintereinander und/oder parallel zueinander angeordnet sind.

13. Vorrichtung nach einem der Ansprüche 8 bis 12,
**dadurch gekennzeichnet,** daß die Induktivität mit einer Schaltung zum Erzeugen einer Gleich- und einer Wechselspannung verbunden ist.

14. Vorrichtung nach Anspruch 13,
**dadurch gekennzeichnet, daß** die Schaltung einen Oszillator zum Erzeugen einer sinusförmigen Wechselspannung aufweist, die zu einer trapezförmigen Wechselspannung mit einer Impulshöhe von 5 Vss bis 50 Vss, vorzugsweise 15 Vss veränderbar ist.

15. Vorrichtung nach Anspruch 14,
**dadurch gekennzeichnet, daß** die Schwingungsfrequenz des Oszillators zwischen 100 Hz und 10.000 Hz liegt, vorzugsweise 5.000 Hz ist.

16. Vorrichtung nach einem der Ansprüche 8 bis 15,
**dadurch gekennzeichnet, daß** die Schaltung einen vorgespannten IC-Verstärker aufweist.

17. Vorrichtung nach einem der Ansprüche 8 bis 16,
**dadurch gekennzeichnet, daß** das Behältnis (10) aus Kunststoff, vorzugsweise aus PVC ist.

## Claims

1. A process for the physical treatment of substances, in particular for the treatment of water, mineral lyes, acids, bases, and the like, wherein the substance is exposed to a composite electromagnetic field which is formed by at least a standing and an alternating electromagnetic field, said standing electromagnetic field being produced by an inductor to which a dc voltage is applied, and said alternating electromagnetic field being produced by an inductive resistor to which an ac voltage is applied, characterized in that said alternating electromagnetic field is produced by a trapezoidal ac voltage.

2. A process as set forth in claim 1,
characterized in that said trapezoidal ac voltage is derived from a sinusoidal ac voltage.

3. A process as set forth in claim 1 or 2, wherein the substance to be treated is capable of flow,
characterized in that the substance is passed through a through-flow body and in so doing is exposed to the composite electromagnetic field.

4. A process as set forth in claim 3,
characterized in that the alternating electromagnetic field rotates about an axis which is parallel to the direction of flow of the substance which is capable of flow.

5. A process as set forth in one of claims 1 to 4,
characterized in that the substance is accommodated in a container into which is plunged a device for producing the composite electromagnetic field.

6. A process as set forth in one of claims 1 to 5,
characterized in that the substance is exposed several times in succession to the composite electromagnetic field.

7. A process as set forth in one of claims 1 to 6,
characterized in that the substance is divided into at least two quantitative portions which are simultaneously exposed to a composite electromagnetic field.

8. An apparatus for the physical treatment of substances, in particular for treating water, preferably for carrying out the process as set forth in one of claims 1 to 7, comprising a receiving container (10) for the substance and an inductor (20) connected to a circuit which produces a composite electromagnetic field at the inductor, which is composed at least of a standing and an alternating electromagnetic field,
characterized in that there are provided means for producing trapezoidal pulses for the alternating electromagnetic field.

9. An apparatus as set forth in claim 8,
characterized in that the inductor is a coil (20).

10. An apparatus as set forth in claim 9,
characterized in that the coil (20) is formed from eight layers with 350 turns per layer.

11. An apparatus as set forth in one of claims 8 to 10, the substance being capable of flow,
characterized in that die receiving container is formed by at least one through-flow body (10) which permits the substance to flow therethrough and at the outside of which the inductor (20) is provided.

12. An apparatus as set forth in claim 11,
characterized in that there are provided several through-flow bodies (10) which are arranged in succession and/or parallel to each other.

13. An apparatus as set forth in one of claims 8 to 12,
characterized in that the inductor is connected to a circuit for producing a dc and an ac voltage.

14. An apparatus as set forth in claim 13,
characterized in that the circuit comprises an oscillator for producing a sinusoidal ac voltage that can be changed into a trapezoidal ac voltage with a pulse height of 5 Vₚₚ to 50 Vₚₚ, preferably 15 Vₚₚ.

15. An apparatus as set forth in claim 14,
characterized in that the oscillation frequency of the oscillator is between 100 Hz and 10,000 Hz, preferably 5,000 Hz.

16. An apparatus as set forth in one of claims 8 to 15,
characterized in that the circuit has a biased IC amplifier.

17. An apparatus as set forth in one of claims 8 to 16,
characterized in that the container (10) is made of synthetic material, preferably PVC.

## Revendications

1. Procédé pour le traitement physique de substances, notamment pour traiter de l'eau, des lessives minérales, des acides, des bases et d'autres substances semblables, dans lequel la substance est exposée à un champ électromagnétique composé formé par au moins un champ électromagnétique stationnaire et un champ électromagnétique alternant, le champ électromagnétique stationnaire étant produit par une résistance inductive à laquelle est appliquée une tension continue et le champ électromagnétique alternant étant produit par une résistance inductive à laquelle est appliquée une tension alternative,
caractérisé en ce que le champ électromagnétique alternant est produit par une tension alternative trapézoïdale.

2. Procédé selon la revendication 1,
caractérisé en ce que la tension alternative trapézoïdale est dérivée d'une tension alternative sinusoïdale.

3. Procédé selon l'une des revendications 1 ou 2 dans lequel la substance à traiter est capable de couler,
caractérisé en ce que la substance est passée à travers un corps de passage tout en étant exposée au champ électromagnétique composé.

4. Procédé selon la revendication 3,
caractérisé en ce que le champ électromagnétique alternant tourne autour d'un axe parallèle à la direction d'écoulement de la substance capable de couler.

5. Procédé selon l'une des revendications 1 à 4,
caractérisé en ce que la substance est placée dans un récipient dans lequel est plongé un dispositif à produire le champ électromagnétique composé.

6. Procédé selon l'une des revendications 1 à 5,
caractérisé en ce que la substance est exposée à plusieurs reprises de suite au champ électromagnétique composé.

7. Procédé selon l'une des revendications 1 à 6,
caractérisé en ce que la substance est divisée en au moins deux portions quantitatives qui sont simultanément exposées à un champ électromagnétique composé.

8. Dispositif pour le traitement physique de substances, notamment pour traiter de l'eau, de préférence pour exécuter le procédé selon l'une des revendications 1 à 7, comportant un récipient (10) pour la substance ainsi qu'une résistance inductive (20) reliée à un circuit qui produit un champ électromagnétique composé à la résistance inductive qui est composé d'au moins un champ électromagnétique stationnaire et un champ électromagnétique alternant,
caractérisé en ce que des moyens à produire des impulsions trapézoïdales pour le champ électromagnétique alternant sont prévus.

9. Dispositif selon la revendication 8,
caractérisé en ce que la résistance inductive est une bobine (20).

10. Dispositif selon la revendication 9,
caractérisé en ce que la bobine (20) est formée de 8 couches à 350 spires chacune.

11. Dispositif selon l'une des revendications 8 à 10, dans lequel la substance est capable de couler,
caractérisé en ce que le récipient est formé par au moins un corps de passage (10) permettant le passage de la substance et sur la surface extérieure duquel est prévue la résistance inductive (20).

12. Dispositif selon la revendication 11,
caractérisé en ce que plusieurs corps de passage (10) sont prévus qui sont disposés l'un derrière l'autre et/ou en parallèle l'un à l'autre.

13. Dispositif selon l'une des revendications 8 à 12,
caractérisé en ce que la résistance inductive est reliée à un circuit à produire une tension continue et une tension alternative.

14. Dispositif selon la revendication 13,
caractérisé en ce que le circuit comprend un oscillateur à produire une tension sinusoïdale qui peut être changée en une tension alternative trapézoïdale à amplitude comprise entre 5 Vₚₚ et 50 Vₚₚ, de préférence 15 Vₚₚ.

15. Dispositif selon la revendication 14,
caractérisé en ce que la fréquence d'oscillation de l'oscillateur est comprise entre 100 Hz et 10.000 Hz, de préférence 5.000 Hz.

16. Dispositif selon l'une des revendications 8 à 15,
caractérisé en ce que le circuit comprend un IC amplificateur polarisé.

17. Dispositif selon l'une des revendications 8 à 16,
caractérisé en ce que le récipient (10) est en matière plastique, de préférence en PVC.
